# FASCICULE DE BREVET EUROPEEN

(11) **EP 0 649 771 B1**
(45) Date de publication et mention de la délivrance du brevet: **24.07.1996**
(21) Numéro de dépôt: 94402298.7
(22) Date de dépôt: 12.10.1994
(51) Int. Cl.: B60N 2/30

(54) **Siège auxiliaire escamotable pour véhicule**
Klappzusatzsitz für Fahrzeuge
Collapsible auxiliary seat for vehicles

(30) Priorité: 26.10.1993 FR 9312760
(43) Date de publication de la demande: 26.04.1995
(73) Titulaire: CESA COMPAGNIE EUROPEENNE DE SIEGES POUR AUTOMOBILES, F-92307 Levallois-Perret Cédex (FR)
(72) Inventeur: Lesourd, Bruno, F-45230 Chatillon Coligny (FR)
(74) Mandataire: Polus, Camille

(56) Documents cités:
- DE-A- 2 843 667
- DE-A- 3 719 584
- DE-A- 3 911 264
- FR-A- 2 079 920
- GB-A- 2 110 619
- GB-A- 2 268 877
- US-A- 1 609 605

## Description

La présente invention concerne un siège auxiliaire escamotable pour véhicules notamment automobiles terrestres du genre connu par exemple par FR-A-2 079 920 (correspondant au préambule de la revendication indépendante).

Comme il est courant, les véhicules automobiles terrestres appelés habituellement "breaks" comprennent, en général, une plate-forme allongée par rapport à celle des véhicules automobiles terrestres nommés communément "berlines" dont ils sont dérivés. Cette disposition permet non seulement d'augmenter la capacité de chargement du véhicule par exemple avec des bagages ou autres mais permet aussi d'augmenter, s'il y a lieu, le nombre des places disponibles pour y transporter des passagers. En effet, avec les véhicules dits "breaks", il y a en général suffisamment de place pour installer d'autres sièges par exemple disposés en une troisième rangée située à l'arrière de la rangée de sièges arrière traditionnels. Cette troisième rangée de sièges permet ainsi de loger des adultes de relativement petite taille ou des enfants. On obtient ainsi de la sorte un véhicule appelé couramment "familiale".

Toutefois, les véhicules dits "break" et les véhicules dits "familiale", issus d'un véhicule "berline" donné sont deux versions bien distinctes et le véhicule dit "familiale" en particulier voit ses capacités de chargement réduites du fait de l'encombrement de sa plate-forme occasionné par les sièges de la troisième rangée, en particulier lorsqu'ils sont inoccupés et même si dans ce cas on peut les replier au moins partiellement à la manière de strapontins ou similaires.

On conçoit donc que l'existence de cette troisième rangée de sièges présente un inconvénient notamment lorsqu'ils sont inoccupés.

Pour résoudre ce type de difficultés, une solution est exposée dans le document FR 1 552 894. Selon la solution de ce document, la troisième rangée de sièges est portée par un châssis d'encadrement amovible utilisable pour des véhicules dits "break" et similaires. Cet accessoire permet d'y asseoir des enfants et, au besoin, lorsqu'il est retiré du véhicule est apte à se transformer en table de pique-nique.

Une telle solution ne convient pas à toutes les situations. En particulier, cet accessoire est relativement encombrant et occupe un volume notable que ce soit de l'espace de la plate-forme arrière lorsqu'il est laissé dans le véhicule avec ses sièges inutilisés ou que ce soit celui d'un garage ou d'une cave lorsqu'il est extrait du véhicule et entreposé. En outre, cet accessoire, soulève de grandes difficultés pour satisfaire aux normes de sécurité tant en ce qui concerne sa fixation au plancher de la plate-forme qu'en ce qui concerne l'ancrage des ceintures de sécurité qui normalement équipent les sièges de véhicule. De plus cette solution procure un confort spartiate.

Le but de l'invention est de remédier à ce type de difficultés à l'aide d'un siège auxiliaire perfectionné doté d'un grand confort qui est destiné à équiper un véhicule et qui est apte à s'escamoter dans son plancher même dans la situation délicate où sous ce dernier se trouve placée une roue de secours.

L'invention a pour objet un siège auxiliaire perfectionné tel que décrit dans la revendication indépendante. Ce siège est destiné à équiper un véhicule et apte à s'escamoter dans son plancher où est ménagée une cavité qui présente une ouverture, un fond et des parois latérales qui délimitent ensemble une enceinte propre à loger le siège et à être close par un couvercle mobile lorsque le siège y est placé. Ce siège, qui est constitué notamment d'une assise avec une armature qui présente des longerons latéraux et des barres transversales extérieure et intérieure et d'un dossier avec une armature qui présente des montants latéraux et des traverses transversales haute et basse, est remarquable en ce qu'il comprend deux bras latéraux avec chacun une extrémité libre destinée à reposer sur le fond, une extrémité ancrée relié par un pivot à un montant latéral du dossier et un élément intermédiaire reliée par un pivot à une longeron latéral de l'assise, une articulation qui définit un axe de basculement pour le siège et le couvercle et qui est faite d'une partie fixe solidaire d'une paroi latérale de la cavité à proximité de son ouverture et d'une partie mobile qui porte l'armature du dossier et le couvercle, et des moyens de retenue coopérant notamment avec la barre transversale intérieure de l'armature de l'assise pour maintenir le siège dans une position déployée où il est apte à recevoir un occupant après basculement à partir de la position escamotée dans la cavité et hors de celle-ci, ces pivots étant disposés de manière que, lorsque le siège passe de sa position déployée à sa position escamotée, l'assise et le dossier se décalent relativement orthogonalement à la direction de l'axe de basculement.

Grâce à la cinématique adoptée, il est possible d'allier un grand confort pour l'occupant lorsque le siège est érigé en position déployée et un encombrement minimal pour le siège lorsque celui-ci est replié en position escamotée.

D'autres caractéristiques de l'invention apparaîtront à la lecture de la description et des revendications qui suivent ainsi qu'à l'examen du dessin annexé, donné seulement à titre d'exemple, où :
- la Figure 1 est une vue en élévation schématique partielle d'un mode de réalisation d'un siège auxiliaire selon l'invention dans la position déployée qu'il occupe lorsqu'un passager y est assis;
- la Figure 2 est une vue perspective partielle schématique du mode de réalisation du siège de la Figure 1;
- la Figure 3 est une vue en élévation partielle, schématique avec coupes locales, du siège des Figures 1 et 2 en position escamotée; et
- la Figure 4 est une vue perspective schématique de ce mode de réalisation d'un siège selon l'invention, en position escamotée, montrant l'imbrication mutuelle du dossier et du siège décalés relativement longitudinalement.

Les véhicules en particulier automobiles terrestres ainsi que les sièges repliables étant bien connus dans la technique, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté.

Dans ce qui suit, on utilise toujours un même numéro de référence pour identifier un élément homologue quel que soit le mode de réalisation ou sa variante d'exécution.

Pour la commodité de l'exposé, on décrira successivement chacun des constituants d'un siège auxiliaire escamotable perfectionné selon l'invention avant d'en exposer au besoin la fabrication et le fonctionnement ainsi que la mise en oeuvre.

Dans ce qui suit, on décrit un siège selon l'invention dans son application particulière à un véhicule dit "break" dont seul le siège de la rangée arrière occupé par un passager et le plancher sont schématisés. Il est clair que cette application spécifique n'est pas limitative et qu'un siège suivant l'invention peut aussi être utilisé pour d'autres véhicules automobiles terrestres par exemple dits "coupés" ou "cabriolets".

Comme on le voit sur les figures du dessin auxquelles on se reportera, un plancher 10 d'un véhicule est conformé pour présenter une cavité 11, fosse, caisson, cuve ou analogue. Cette cavité 11 présente une ouverture 111, un fond 112 et des parois latérales 113 qui délimitent ensemble une enceinte 110. S'il y a lieu, pour les raisons qui apparaîtront par la suite l'ouverture 111 de la cavité 11 est bordée, au moins partiellement, par une feuillure 114 ou similaire.

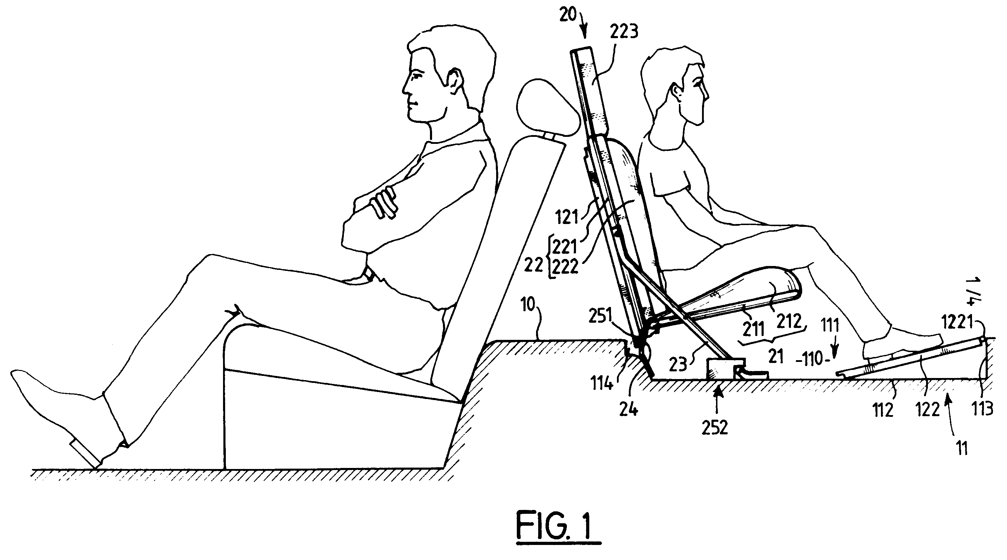

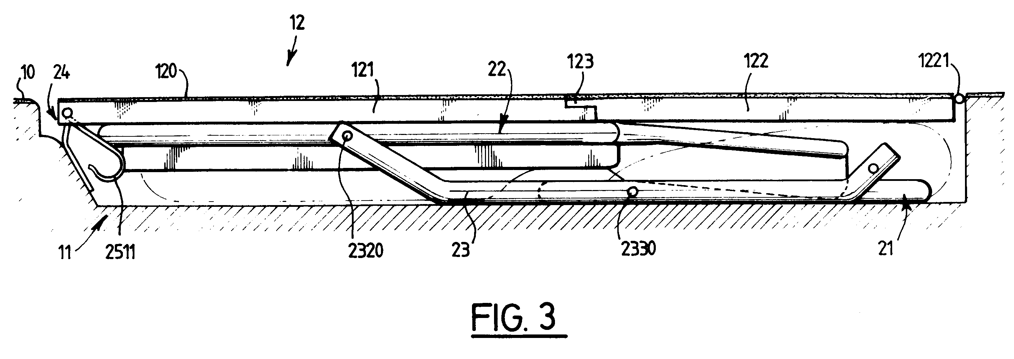

Un couvercle 12 permet de clore l'ouverture 111 de la cavité 11 lorsqu'un siège y est placé. Le couvercle 12 est destiné à prolonger le plancher et à assurer sa continuité lorsqu'il est placé sur la cavité pour la clore. La face de ce couvercle qui est apparente lorsque la cavité est close, porte s'il y a lieu un habillage 120 tel que par exemple une moquette ou un tapis en caoutchouc ou en élastomère, comme il est classique d'en équiper notamment les coffres des véhicules. De préférence, le couvercle 12 est fait en deux tronçons indépendants. L'un de ces tronçons est constitué d'une plaque 121 et l'autre de ces tronçons est constitué d'une plaquette 122 dont les rôles propres seront exposés par la suite. Il suffit pour le moment d'indiquer que la plaquette 122 est mobile et montée sur le plancher 10 à proximité de l'ouverture 111 de la cavité à l'aide d'au moins un gond 1221, ou similaire. De la sorte, la plaquette 122 est apte à prendre appui dans la cavité 11 en position inclinée comme illustré sur la Figure 1 pour les raisons que l'on comprendra par la suite. La plaquette 122 peut aussi se relever totalement hors de la cavité et, s'il y a lieu, se rabattre contre le plancher après avoir basculé d'un demi-tour à partir de la position où elle est illustrée sur la Figure 3. L'une des plaque 121 et plaquette 122 est, de préférence, munie d'une butée 123 telles que des pattes ou une cornière de manière à pouvoir immobiliser la plaquette 122 dans le prolongement de la plaque 121 lorsque cette dernière clos partiellement l'ouverture de la cavité comme illustré sur la Figure 3. Pour ce faire, la plaque 121 repose alors dans la feuillure 114, comme illustré sur la Figure 3.

Un siège 20 est mobile entre une position escamotée dans la cavité close par le couvercle et une position déployée hors de la cavité où il est apte à être occupé par un passager qui peut s'y assoir. Le siège 20 comprend, essentiellement une assise 21, un dossier 22, des bras 23, une articulation 24 et des moyens de retenue 25.

L'assise 21 comprend une armature 211 avec des longerons 2111 latéraux et des barres 2112 extérieure et intérieure. Cette armature de tout type classique courant, par exemple faite de tubes mécano-soudés, est destinée à recevoir une surface d'appui 212 sur laquelle prendra place un occupant qui y fera reposer son fessier et ses cuisses. Cette surface d'appui est faite par exemple d'une bande de tissu ou d'un coussin ou similaire avec, de préférence, des bourrelets, rembourrages ou matelassures latéraux et transversaux.

Le dossier 22 est fait d'une armature 221 avec des montants 2211 latéraux et des traverses 2212 haute et basse. Cette armature est de tout type connu approprié comme il a été indiqué à propos de l'armature de l'assise. Cette armature est destinée à recevoir une surface d'appui 222 de tout type courant classique comme indiqué à propos de la surface d'appui de l'assise. Le dossier 22 est, de préférence, équipé d'un appui-tête 223 ainsi que de bourrelets latéraux comme illustré.

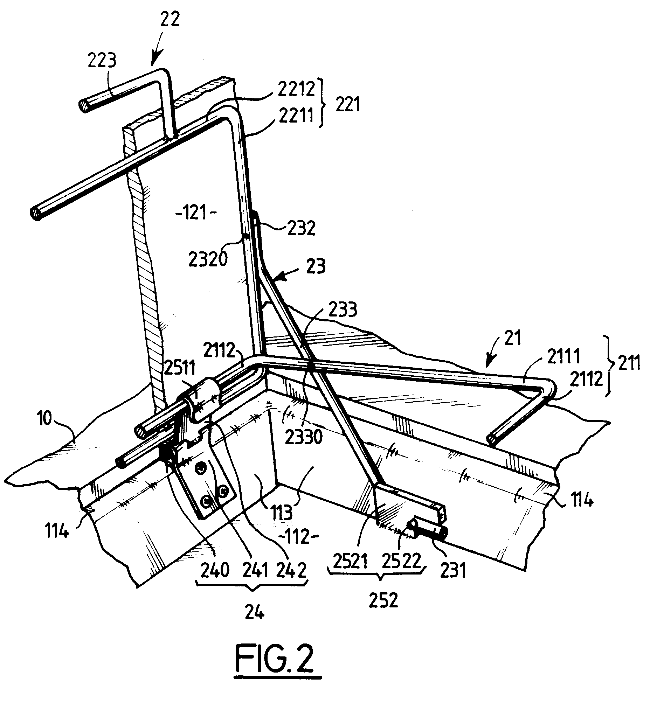

Chacun des deux bras latéraux 23 comprend une extrémité libre 231 destinée à reposer sur le fond 112, une extrémité 232 ancrée reliée par un pivot 2320 à un montant latéral 2211 du dossier 22 par exemple à proximité de la traverse haute 2212, et un élément 233 intermédiaire relié par un pivot 2330 à un longeron latéral 2111 de l'assise 21 par exemple à proximité de la barre intérieure 2112. Tout ceci apparaît clairement sur la Figure 2 du dessin notamment. Les pivots 2320 et 2330 sont de tout type approprié, faits par exemple d'un palier ou trou ou analogue dans lequel est engagée une broche ou goupille ou similaire.

L'articulation 24 de tout type approprié connu telle qu'au moins une charnière, paumelle ou gond, définit un axe 240 de basculement. Cette articulation 24 comprend deux parties 241 et 242. La partie 241 est fixe et rendue solidaire de la paroi latérale 113 de la cavité 11 à proximité de son ouverture 111. Cette partie fixe 241 est maintenue de toute manière appropriée classique par exemple par vissage comme illustré ou rivetage, soudage, collage, etc. La partie mobile 242 est rendue solidaire de la traverse basse 2212 de l'armature 221 du dossier 22 comme illustré. La fixation de la traverse basse sur la partie mobile est assurée de toute manière classique appropriée par exemple vissage, rivetage, soudage, collage, etc. Comme on peut l'observer, la plaque 121 du couvercle est portée par l'armature 221 du dossier 22 sur laquelle elle est maintenue de toute manière appropriée par exemple vissage, collage ou similaire.

Les moyens de retenue 25 comprennent notamment un appui 251 sur la partie mobile 242 de l'articulation. Cet appui 251 est destiné à coopérer avec l'assise et plus spécialement avec la barre intérieure 2112 de l'assise. Cet appui 251 se présente par exemple à la manière d'au moins un crochet, de préférence élastique et en forme de lyre avec une entrée évasée pour les raisons qui apparaîtront par la suite. Il y a lieu d'observer que le crochet est tourné ou orienté vers l'axe de basculement 240. Cet appui est d'un seul tenant avec la partie mobile, comme dessiné, ou rapporté sur celle-ci. Les moyens de retenue 25 comprennent aussi de préférence au moins un arrêtoir 252 placé dans la cavité 11 et destiné à coopérer avec au moins une extrémité libre 231 d'un desdits bras 23. Cet arrêtoir 252 comprend par exemple une équerre 2521 fixée dans la cavité 11 de toute manière appropriée convenable par exemple par vissage, soudage ou similaire et un téton 2522, doigt ou analogue fixé de toute manière appropriée classique à l'extrémité libre 231 du bras 23. Tout ceci apparaît clairement en particulier sur la Figure 2 du dessin. L'équerre 2521 est fixée sur le fond ou sur une paroi latérale de la cavité 11, selon le côté du bras sur lequel le téton 2522 est saillant.

Tous les constituants d'un siège auxiliaire escamotable selon l'invention sont fabriqués à l'aide de matériaux courants classiques découpés, mis en forme et assemblés selon des techniques traditionnelles appropriées.

Tous les constituants sont réunis, assemblés et montés comme cela ressort clairement de l'examen des figures du dessin.

On décrira maintenant le fonctionnement d'un siège selon l'invention.

On suppose qu'initialement le siège selon l'invention occupe la position déployée où il est illustré sur les Figures 1 et 2. On observera que dans cette position, la barre transversale intérieure 2112 de l'armature de l'assise c'est-à-dire celle proche du dossier, est retenue dans au moins un crochet 2511 de l'appui des moyens de retenue et, aussi, que l'extrémité libre 231 de chacun des bras 23 repose sans entrave sur le fond 112 de la cavité du plancher. On observera aussi que la position choisie pour implanter le pivot 2330 est telle que lorsqu'un passager occupe normalement le siège selon l'invention son centre de gravité se trouve, par rapport à ce pivot, du côté de la barre transversale extérieure de l'assise c'est-à-dire celle éloignée du dossier, de sorte que le poids de l'occupant tend normalement à faire basculer l'assise dans le sens qui favorise et assure le maintien de la barre transversale intérieure dans le crochet. On observera de plus que les pivots 2320, 2330 et la barre transversale intérieure 2112 du siège en position déployée forment un triangle qui confère à celui-ci une rigidité quasiment absolue. On comprend donc que bien que le siège selon l'invention soit articulé dans son ensemble notamment par l'articulation 24, le simple appui de l'extrémité libre des bras sur le fond de la cavité suffit à assurer sa stabilité.

Toutefois, on observera que si l'occupant du siège venait à prendre très fortement appui sur le repose-pied que constitue la plaquette 122 du couvercle 12, comme illustré sur la Figure 1 ou s'il se produisait un choc frontal à grande composante longitudinale, repérée par rapport au véhicule, le siège tendrait à basculer dans le sens anti-horaire en examinant en particulier les Figures 1 et 2 du dessin, sur son articulation 24. Cette conséquence indésirable est interdite par la présence de l'arrêtoir 252 dont l'équerre 2521 est correctement orientée pour contrebattre un tel basculement néfaste.

Si maintenant l'occupant quitte le siège suivant l'invention et qu'on veuille placer le siège dans sa position escamotée dans la cavité, on opère comme indiqué par la suite.

Le hayon postérieur ou similaire du véhicule, non représenté, étant préalablement ouvert, on extrait la plaquette repose-pied inclinée du fond de la cavité et on la fait basculer hors de celle-ci, au besoin en la laissant reposer ou choir contre le plancher; on peut se saisir de la barre transversale extérieure de l'assise et la soulever dans le sens anti-horaire, en regardant les figures du dessin. En faisant ceci, on dégage la barre transversale intérieure des crochets des moyens de retenue. Il suffit alors de tirer vers soi l'assise du siège à l'aide de la barre transversale extérieure. On observe que le triangle dont il a été question précédemment est "brisé" et qu'alors l'assise et le dossier du siège peuvent basculer relativement l'un à l'autre. L'extrémité libre des bras glisse alors sur le fond de la cavité en s'éloignant de l'articulation et en faisant en sorte que son téton se dégage de l'équerre de l'arrêtoir. Le dossier avec sa plaque du couvercle se rabattent horizontalement et les bords de la plaque prennent appui sur la feuillure en dépression par rapport au niveau du plancher. Il suffit alors de terminer en rabattant la plaquette repose-pied du couvercle pour lui faire prendre appui sur les butées afin de reconstituer une surface pratiquement parfaitement plane grâce au couvercle qui prolonge le reste du plancher du véhicule, comme illustré sur la Figure 3.

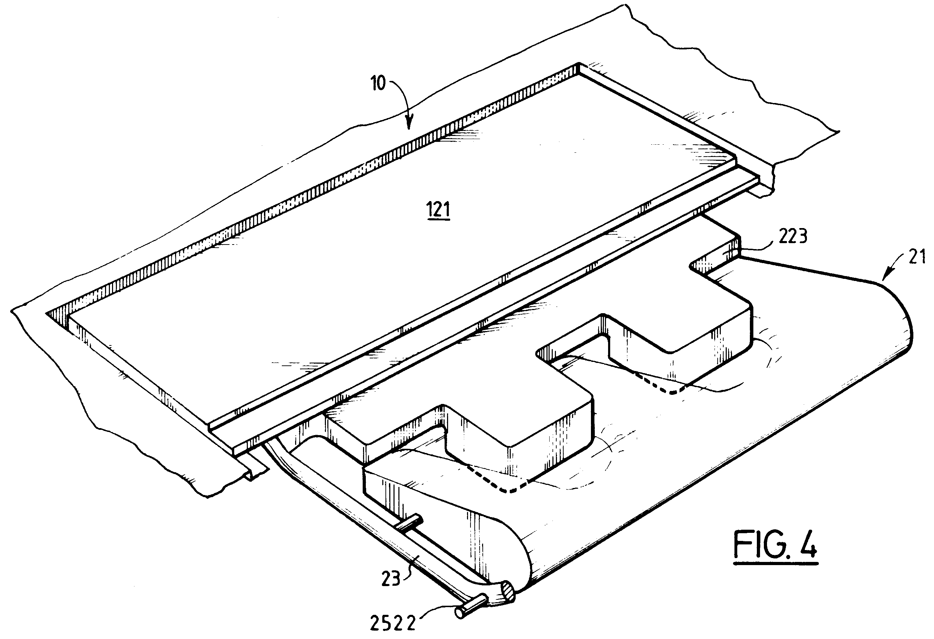

Il y a lieu d'observer que lorsqu'un siège suivant l'invention passe de sa position déployée illustrée sur les Figures 1 et 2 à sa position escamotée illustrée sur la Figure 3, l'assise s'est déplacée pour venir à proximité de l'extrémité de la cavité opposée à celle où est située l'articulation. Ceci présente un intérêt considérable puisqu'on obtient de la sorte un décalage "longitudinal" du dossier relativement à l'assise. Bien que les surfaces d'appui du dossier et de l'assise sont choisies pour être les plus minces possible afin de gagner en "épaisseur" ou "en hauteur", ce décalage permet d'améliorer notablement le confort procuré par le siège puisqu'il autorise un échappement mutuel des bourrelets latéraux et transversaux utilisés pour assurer un soutien notamment lombaire et du creux poplité. Du fait de ce décalage "longitudinal" du dossier et de l'assise lorsque le siège est en position escamotée, les bourrelets en question peuvent prendre et trouver leur place particulière propre, sans interférer pour autant dans la cavité. On observera en particulier que l'appui-tête malgré sa longueur ou hauteur normale, peut se loger sans difficulté au-dessus de la zone centrale de l'assise sans buter sur les bourrelets latéraux et transversal de la partie extérieure de l'assise. Ceci est clairement illustré sur la Figure 4.

Si maintenant on suppose qu'un siège perfectionné suivant l'invention est initialement dans la position escamotée illustrée sur la Figure 3 et qu'on veuille le placer dans sa position déployée, il suffit d'opérer exactement dans l'ordre inverse. On soulève d'abord la plaquette repose-pied du couvercle et on pousse sur la barre transversale extérieure de l'assise au besoin en facilitant la manoeuvre par un petit relevage du dossier. L'extrémité libre des bras glisse alors en direction de l'articulation et le téton porté par l'extrémité libre des bras prend place dans l'équerre de l'arrêtoir. Il suffit alors d'abaisser la barre transversale extérieure de l'assise et de la forcer dans le crochet lyre pour vaincre son élasticité. Le siège est alors immobilisé et il suffit de rebasculer la plaquette repose-pied pour lui faire prendre sa position inclinée quand elle repose sur le fond de la cavité.

Ce qui a été décrit vaut pour un siège mono ou multiplace et que ce siège soit ou non divisé en fractions partiellement ou totalement autonomes, par exemple du type 1/3, 2/3 comme il est classique.

Le mode de réalisation du siège perfectionné selon l'invention a été décrit et illustré avec une orientation telle que son ou ses occupants sont dirigés "dos à la route". Il est clair que rien ne s'oppose à ce que l'orientation choisie soit inverse et que les occupants d'un tel siège selon l'invention soient dirigés "face à la route", ou bien même "de côté", les deux sièges étant alors orientés "face à face" ou "dos à dos" et l'axe d'articulation étant alors parallèle à l'axe longitudinal du véhicule.

Ce qui précède montre qu'un siège selon l'invention est d'une très grande rusticité d'exécution et met en oeuvre une cinématique très simple qui, pourtant, lui assure une "auto-stabilité" procurée par le choix judicieux de l'emplacement des axe et pivots et par un effet de triangulation indéformable. Ce siège, qui est d'un coût de revient relativement modeste, assure toutefois un confort amélioré grâce à la possibilité d'avoir un groupe dossier-appui-tête de hauteur pratiquement normale et grâce à la possibilité de disposer des bourrelets de maintien sur les surfaces d'appui de l'assise et du dossier, confort qui est encore accru par la présence d'un repose-pied.

Outre ceci, le siège perfectionné suivant l'invention est d'un très faible encombrement en épaisseur ou selon la direction verticale lorsqu'il est en position escamotée grâce à la cinématique adoptée qui procure un décalage mutuel important de l'assise et du dossier orthogonalement à la direction de l'axe de l'articulation permettant aux bourrelets d'assise et de dossier de ne pas interférer et aux appuis-tête de trouver leur place dans les creux de l'assise. De plus, ce siège satisfait aux normes de sécurité.

Ce qui précède met bien en lumière les particularités distinctives d'un siège perfectionné selon l'invention, l'intérêt qu'il offre et les avantages qu'il procure.

## Revendications

1. Siège auxiliaire perfectionné destiné à équiper un véhicule et apte à s'escamoter dans son plancher (10) où est ménagée une cavité (11) qui présente une ouverture (111), un fond (112) et des parois (113) latérales qui délimitent ensemble une enceinte (110) propre à loger le siège et à être close par un couvercle (12) mobile lorsque le siège y est placé, où ce siège (20) qui est constitué notamment d'une assise (21) avec une armature (211) qui présente des longerons (2111) latéraux et des barres (2112) transversales extérieure et intérieure, et d'un dossier (22) avec une armature (221) qui présente des montants (2211) latéraux et des traverses (2212) transversales haute et basse est caractérisé en ce qu'il comprend deux bras (23) latéraux avec, chacun, une extrémité (231) libre destinée à reposer sur le fond (112), une extrémité (232) ancrée reliée par un pivot (2320) à un montant latéral (2211) du dossier (22) et un élément (233) intermédiaire relié par un pivot (2330) à un longeron latéral (2111) de l'assise (21), une articulation (24) qui définit un axe (240) de basculement pour le siège (20) et le couvercle (12) et qui est faite d'une partie (241) fixe solidaire d'une paroi latérale (113) de la cavité (11) à proximité de son ouverture (111) et d'une partie (242) mobile qui porte l'armature (221) du dossier (22) et le couvercle (12), et des moyens de retenue (25) coopérant notamment avec la barre transversale intérieure (2112) de l'armature (211) de l'assise (21) pour maintenir le siège dans une position déployée où il est apte à recevoir un occupant, après basculement à partir de la position escamotée dans la cavité et hors de celle-ci, ces pivots (2320, 2330) étant disposés de manière que lorsque le siège passe de sa position déployée à sa position escamotée, l'assise (21) et le dossier (22) se décalent relativement orthogonalement à la direction de l'axe (240) de basculement.

2. Siège selon la revendication 1, caractérisé en ce que le pivot (2320) est placé à proximité de la traverse haute (2212) et le pivot (2330) est placé à proximité de la barre intérieure (2112).

3. Siège selon la revendication 1 ou 2, caractérisé en ce que les moyens de retenue (25) comprennent au moins un appui (251) en forme de crochet (2511) porté par la partie mobile (242) de l'articulation (24).

4. Siège selon la revendication 3, caractérisé en ce que le crochet (2511) est élastique et en forme de lyre.

5. Siège selon l'une quelconque des revendications 1 à 4, caractérisé en ce que les moyens de retenue (25) comprennent au moins un arrêtoir (252) placé dans la cavité (11) et coopérant avec au moins une extrémité libre (231) d'un bras (23).

6. Siège selon la revendication 5, caractérisé en ce que l'arrêtoir (252) comprend une équerre (2521) fixée dans la cavité (11) et un téton (2522) fixé à l'extrémité libre (231) du bras (23).

7. Siège selon l'une quelconque des revendications 1 à 6, caractérisé en ce que le couvercle (12) est fait de deux tronçons indépendants.

8. Siège selon la revendication 7, caractérisé en ce que l'un des tronçons du couvercle (12) est une plaque (121) portée par l'armature (221) du dossier (22) et l'autre des tronçons est une plaquette (122) mobile montée sur le plancher (10) à proximité de l'ouverture (111) de la cavité (11) et à l'opposé de l'articulation (24) de manière à pouvoir pénétrer dans la cavité (11).

9. Siège selon l'une quelconque des revendications 1 à 8, caractérisé en ce que l'ouverture (111) de la cavité (11) est bordée au moins partiellement par une feuillure (114) apte à recevoir le couvercle (12) qui y repose localement lorsque le siège (20) est en position escamotée.

10. Siège selon l'une quelconque des revendications 8 et 9, caractérisé en ce que la plaque (121) peut reposer dans la feuillure (114) et en ce que l'une des plaque (121) et plaquette (122) est munie d'une butée (123) pour immobiliser la plaquette (122) dans le prolongement de la plaque (121) lorsque le siège (20) est en position escamotée.

11. Siège selon l'une quelconque des revendications 8 à 10, caractérisé en ce que la plaquette (122) est montée sur le plancher (10) à l'aide d'au moins un gond (1221) et est apte à prendre appui dans la cavité (11) en position inclinée pour servir de repose-pied.

12. Siège selon l'une quelconque des revendications 1 à 11, caractérisé en ce que les armatures (211, 221) portent, chacune, une surface d'appui (212, 222) pour recevoir le corps d'un occupant.

13. Siège selon la revendication 12, caractérisé en ce que l'une au moins des surfaces d'appui (212, 222) est munie de bourrelets.

14. Siège selon l'une quelconque des revendications 1 à 13, caractérisé en ce que le dossier (22) est muni d'un appui-tête (223).

15. Siège selon l'une quelconque des revendications 1 à 14, caractérisé en ce que le siège (20) est divisé au moins partiellement en fractions autonomes.

16. Siège selon l'une quelconque des revendications 1 à 15, caractérisé en ce que le siège (20) est orienté "dos la route".

## Claims

1. An improved auxiliary seat designed to be fitted in a vehicle and capable of retracting into its floor (10) where there is recessed a cavity (11) which has an opening (111), a base (112) and side walls (113) which together define an enclosed space (110) capable of accommodating the seat and of being closed by a moveable cover (12) when the seat is positioned therein, this seat (20), which comprises in particular a base portion (21) with a reinforcement (211) having side rails (2111) and exterior and interior transverse rods (2112) and a back portion (22) with a reinforcement (221) which has lateral vertical columns (2211) and upper and lower transverse crosspieces (2212), being characterised in that it comprises two side arms (23), each with a free end (231) designed to rest on the base (112), one anchored end (232) connected by a pivot (2320) to a lateral vertical column (2211) of the back portion (22) and an intermediate member (233) connected by a pivot (2330) to a side rail (2111) of the base portion (21), a joint (24) which defines a swing axis (240) for the seat (20) and the cover (12) and which is comprised of a fixed portion (241) immovably attached to a side wall (113) of the cavity (11) near to its opening (111) and of a moveable portion (242) which supports the reinforcement (221) of the back portion (22) and the cover (12), and retaining means (25) co-operating in particular with the interior transverse rod (2112) of the reinforcement (211) of the base portion (21) in order to keep the seat in an unfolded position where it is capable of seating a passenger, after swinging from its retracted position in the cavity and outside of the same, these pivots (2320, 2330) being positioned in such a way that, when the seat moves from its unfolded position into its retracted position, the base portion (21) and the back portion (22) are moved forward mutually perpendicular to the direction of the swing axis (240).

2. A seat as claimed in claim 1, characterised in that the pivot (2320) is positioned near to the upper crosspiece (2212) and the pivot (2330) is positioned near to the interior rod (2112).

3. A seat as claimed in claim 1 or 2, characterised in that the retaining means (25) comprise at least one support (251) in the form of a hook (2511) supported by the moveable portion (242) of the joint (24).

4. A seat as claimed in claim 3, characterised in that the hook (2511) is flexible and U-shaped.

5. A seat as claimed in one of claims 1 to 4, characterised in that the retaining means (25) comprise at least one stop (252) positioned in the cavity (11) and co-operating with at least one free end (231) of one arm (23).

6. A seat as claimed in claim 5, characterised in that the stop (252) comprises an angle iron (2521) mounted in the cavity (11) and a stud (2522) mounted at the free end (231) of the arm (23).

7. A seat as claimed in one of claims 1 to 6, characterised in that the cover (12) is made of two separate sections.

8. A seat as claimed in claim 7, characterised in that one of the sections of the lid (12) is a plate (121) resting on the reinforcement (221) of the back portion (22) and the other section is a small moveable plate (122) mounted on the floor (10) near to the opening (111) of the cavity (11) and at the opposite end to the joint (24) so that it is able to enter the cavity (11).

9. A seat as claimed in one of claims 1 to 8, characterised in that the opening (111) of the cavity (11) is bordered at least partially by a rabbet (114) capable of accommodating the cover (12) which rests there locally when the seat (20) is in the retracted position.

10. A seat as claimed in one of claims 8 and 9, characterised in that the plate (121) is able to rest in the rabbet (114) and in that either the plate (121) or the small plate (122) is fitted with a catch (123) to lock the small plate (122) in the projection of the plate (121) when the seat (20) is in the retracted position.

11. A seat as claimed in one of claims 8 to 10, characterised in that the small plate (122) is mounted on the floor (10) by means of at least one hinge (1221) and is capable of resting in the cavity (11) in an inclined position so as to act as a footrest.

12. A seat as claimed in one of claims 1 to 11, characterised in that each of the reinforcements (211, 221) has a resting surface (212, 222) to accommodate a passenger.

13. A seat as claimed in claim 12, characterised in that at least one of the resting surfaces (212, 222) is padded.

14. A seat as claimed in one of claims 1 to 13, characterised in that the back portion (22) is fitted with a headrest (223).

15. A seat as claimed in one of claims 1 to 14, characterised in that the seat (20) is divided at least partially into self-contained portions.

16. A seat as claimed in one of claims 1 to 15, characterised in that the seat (20) faces away from the direction of travel.

## Patentansprüche

1. Vervollkommneter Zusatzsitz, der für die Ausrüstung eines Fahrzeugs bestimmt ist, um in dessen Boden (10) eingeklappt zu werden, wo ein Hohlraum (11) ausgebildet ist, der eine Öffnung (111), einen Boden (112) und Seitenwände (113) aufweist, die gemeinsam einen Behälter (110) begrenzen, der den Sitz aufnehmen kann und durch einen beweglichen Deckel (12) verschlossen werden kann, wenn der Sitz darin angeordnet ist, wobei dieser Sitz (20) insbesondere aus einer Sitzfläche (21) mit einem Beschlag (211), der seitliche Längsträger (2111) und äußere und innere Querträger (2112) aufweist, und aus einer Rückenlehne (22) mit einem Beschlag (221), der seitliche Stützen (2211) und obere und untere Querstreben (2212) aufweist, gebildet ist, dadurch gekennzeichnet ist, daß er zwei seitliche Arme (23) mit jeweils einem freien Ende (231), das dazu bestimmt ist, am Boden (112) aufzuruhen, einem verankerten Ende (232), das über einen Schwenkzapfen (2320) mit einer seitlichen Stütze (2211) der Rückenlehne (22) verbunden ist, und einem Zwischenelement (233), das über einen Schwenkzapfen (2330) mit einem seitlichen Längsträger (2111) der Sitzfläche (21) verbunden ist, ein Gelenk (24), das eine Kippachse (240) für den Sitz (20) und den Deckel (12) definiert und das aus einem festen Teil (241), der an einer Seitenwand (113) des Hohlraums (11) in der Nähe von dessen Öffnung (111) befestigt ist, sowie einen beweglichen Teil (242) enthält, der den Beschlag (221) der Rückenlehne (22) und des Deckels (12) trägt, sowie Haltemittel (25) umfaßt, die insbesondere mit dem inneren Querträger (2112) des Beschlags (211) der Sitzfläche (21) zusammenwirken, um den Sitz in einer ausgeklappten Stellung zu halten, in der er einen Insassen aufnehmen kann, nachdem er ausgehend von der im Hohlraum eingeklappten Stellung aus diesem gekippt worden ist, wobei die Schwenkzapfen (2320, 2330) in der Weise angeordnet sind, daß sich die Sitzfläche (21) und die Rückenlehne (22) dann, wenn der Sitz von seiner ausgeklappten Stellung in seine eingeklappte Stellung übergeht, relativ zueinander senkrecht zur Richtung der Kippachse (240) verschieben.

2. Sitz nach Anspruch 1, dadurch gekennzeichnet, daß der Schwenkzapfen (2320) in der Nähe der oberen Querstrebe (2212) angeordnet ist und der Schwenkzapfen (2330) in der Nähe des inneren Trägers (2112) angeordnet ist.

3. Sitz nach Anspruch 1 oder 2, dadurch gekennzeichnet, daß die Haltemittel (25) wenigstens eine Abstützung (251) in Form einer Klammer (2511) enthalten, die vom beweglichen Teil (242) des Gelenks (24) getragen wird.

4. Sitz nach Anspruch 3, dadurch gekennzeichnet, daß die Klammer (2511) elastisch und bogenförmig ist.

5. Sitz nach irgendeinem der Ansprüche 1 bis 4, dadurch gekennzeichnet, daß die Haltemittel (25) wenigstens einen Anschlag (252) enthalten, der im Hohlraum (11) angeordnet ist und mit wenigstens einem freien Ende (231) eines Arms (23) zusammenwirkt.

6. Sitz nach Anspruch 5, dadurch gekennzeichnet, daß der Anschlag (252) einen Winkelhaken (2521), der im Hohlraum (11) befestigt ist, und einen Zapfen (2522), der am freien Ende (231) des Arms (23) befestigt ist, umfaßt.

7. Sitz nach irgendeinem der Ansprüche 1 bis 6, dadurch gekennzeichnet, daß der Deckel (12) aus zwei unabhängigen Teilstücken hergestellt ist.

8. Sitz nach Anspruch 7, dadurch gekennzeichnet, daß eines der Teilstücke des Deckels (12) eine Platte (121) ist, die vom Beschlag (221) der Rückenlehne (22) unterstützt ist, und das andere der Teilstücke eine bewegliche Scheibe (122) ist, die an der Bodenplatte (10) in der Nähe der Öffnung (111) des Hohlraums (11) und gegenüber dem Gelenk (24) in der Weise angebracht ist, daß sie in den Hohlraum (11) eindringen kann.

9. Sitz nach irgendeinem der Ansprüche 1 bis 8, dadurch gekennzeichnet, daß die Öffnung (111) des Hohlraums (11) wenigstens teilweise durch eine Fuge (114) eingefaßt ist, die den Deckel (12) aufnehmen kann, der hier lokal aufliegt, wenn sich der Sitz (20) in der eingeklappten Stellung befindet.

10. Sitz nach irgendeinem der Ansprüche 8 und 9, dadurch gekennzeichnet, daß die Platte (121) in der Fuge (114) aufliegen kann und daß entweder die Platte (121) oder die Scheibe (122) mit einem Anschlag (123) versehen ist, um die Scheibe (122) in der Verlängerung der Platte (121) unbeweglich zu machen, wenn sich der Sitz (20) in der eingeklappten Stellung befindet.

11. Sitz nach irgendeinem der Ansprüche 8 bis 10, dadurch gekennzeichnet, daß die Scheibe (122) an der Bodenplatte (10) mit Hilfe wenigstens einer Türangel (1221) angebracht ist und sich im Hohlraum (11) in einer geneigten Stellung abstützen kann, um als Fußstütze zu dienen.

12. Sitz nach irgendeinem der Ansprüche 1 bis 11, dadurch gekennzeichnet, daß die Beschläge (211, 221) jeweils eine Abstützfläche (212, 222) tragen, um den Körper eines Insassen aufzunehmen.

13. Sitz nach Anspruch 12, dadurch gekennzeichnet, daß wenigstens eine der Abstützflächen (212, 222) mit Wulsten versehen ist.

14. Sitz nach irgendeinem der Ansprüche 1 bis 13, dadurch gekennzeichnet, daß die Rückenlehne (22) mit einer Kopfstütze (223) versehen ist.

15. Sitz nach irgendeinem der Ansprüche 1 bis 14, dadurch gekennzeichnet, daß der Sitz (20) wenigstens teilweise in selbständige Teile unterteilt ist.

16. Sitz nach irgendeinem der Ansprüche 1 bis 15, dadurch gekennzeichnet, daß der Sitz (20) "mit dem Rücken in Fahrtrichtung" orientiert ist.
